# EUROPEAN PATENT SPECIFICATION

(11) **EP 2 691 671 B1**
(45) Date of publication and mention of the grant of the patent: **04.03.2015**
(21) Application number: 12714088.7
(22) Date of filing: 02.04.2012
(51) Int. Cl.: F16H 31/00, E02F 3/88, E02F 3/90

(54) **REVERSIBLE ROTATION MECHANISM AND DISCHARGE ASSEMBLY FOR DISCHARGING DREDGED MATERIAL**
UMKEHRBARER ROTATIONSMECHANISMUS UND ENTLADEANORDNUNG ZUM ENTLADEN VON BAGGERGUT
MÉCANISME DE ROTATION RÉVERSIBLE ET ENSEMBLE DE DÉCHARGE POUR DÉCHARGER UN MATÉRIAU DE DRAGAGE

(30) Priority: 31.03.2011 NL 2006500
(43) Date of publication of application: 05.02.2014
(73) Proprietor: IHC Holland IE B.V., 3361 EP Sliedrecht (NL)
(72) Inventor: DE JAGER, Arie, NL-3361 BR Sliedrecht (NL); KUYPERS, Ronny Hubertus Anna, NL-2992 TH Barendrecht (NL); KLOP, Hendrik Adam, NL-2953 BE Alblasserdam (NL); VAN OPSTAL, Timothy Alexander, NL-3031 BB Rotterdam (NL)
(74) Representative: Nederlandsch Octrooibureau
(86) International application number: PCT/NL2012/050216
(87) International publication number: WO 2012/134297

(56) References cited:
- EP-A2- 0 754 881
- CH-A- 357 012
- DE-C- 971 756
- FR-A5- 2 087 282
- GB-A- 762 577
- GB-A- 1 562 068
- US-A- 2 926 547
- US-A- 3 181 380

## Description

### TECHNICAL FIELD

The invention relates to a reversible rotation mechanism for generating a rotational motion, the reversible rotation mechanism comprising
- a first toothed wheel comprising first inclined teeth extending in a generally radial direction,
- a second toothed wheel comprising second inclined teeth extending in a generally radial direction, the first and second toothed wheels being positioned coaxially with respect to each other and the first and second inclined teeth are inclined in opposite directions with respect to each other,
- a plurality of actuators which are arranged to rotate the first toothed wheel in a first direction and the second toothed wheel in a second direction opposite to the first direction.

The invention further relates to a discharge assembly for discharging dredged material, the discharge assembly comprising a discharge pipe being rotatable about a substantially vertical axis and a vessel for discharging dredged material comprising such a reversible rotation mechanism or such a discharge assembly.

### STATE OF THE ART

Dredging vessels collect material from a water bottom (e.g. seafloor). The dredged material is discharged at a location remote from the location where it is collected. Discharging dredged material from a dredging or hopper vessel can be done via a discharge pipe.

The discharge pipe can be arranged to spray the material into the air such that it lands at a distance of approximately 70 - 80 metres from the vessel. This requires much energy and time.

An alternative is described in GB 1 562 068. According to this document, the discharge pipe is a horizontally discharge pipe which extends beyond the dredging vessel. The discharge pipe is rotatable about an approximately vertical axis supported by the vessel. The output end of the discharge pipe is positioned close to the location where the dredged material is to be discharged and the dredged material can exit the discharge pipe with a relatively low velocity. Such a solution allows discharging dredged material with less energy in less time.

For both discharge methods, by rotating the discharge pipe about the vertical axis the discharge position can be changed without the need of moving the vessel. This allows relatively accurate discharge. Rotating the discharge pipe about a vertical axis requires a suitable reversible rotation mechanism that is able to withstand conditions like salt seawater and pollution. Also, maintenance costs and efforts are preferably kept to a minimum.

European patent application EP 0 754 881 A2 discloses the features of the preamble of claim 1 and describes a reversible rotation mechanism. The reversible rotation mechanism comprises two toothed rings comprising teeth extending in a generally radial direction and which are inclined clockwise and anti-clockwise respectively. Four first rams are provided which are associated with the first toothed ring and are arranged to drive the first toothed ring in a first direction. Four second rams are provided which are associated with the second toothed ring and are arranged to drive the second toothed ring in a second direction. All rams are moveable between a first position in which they drivingly engage its associated toothed ring and a second position in which they don't. Each first and second ram is provided with a secondary two-acting ram to move the first and second rams between the first and second position.

In order to drive the first toothed ring, the first rams are positioned in the first position and the second rams are positioned in the second position using the secondary two-acting rams. The first rams are then operated in a phased relationship to rotate the first toothed ring in the first direction.

In order to drive the second toothed ring, the second rams are positioned in the first position and the first rams are positioned in the second position using the secondary two-acting rams. The second rams are then operated in a phased relationship to rotate the second toothed ring in the second direction.

However, the rotation mechanism as disclosed in European patent application EP 0 754 881 A2 comprises sixteen rams which makes it a rather complicated design which is vulnerable to pollution and malfunction. Also, such a rotation mechanism is relatively large and heavy. According to European patent application EP 0 754 881 A2, this rotation mechanism is particularly useful when incorporated in wind turbines to rotate the nacelle and turbine to face the wind when conditions are suitable.

### SHORT DESCRIPTION

It is an object of the invention to provide an improved reversible rotation mechanism that overcomes at least one of the disadvantages of the prior art and which is especially suitable for dredging purposes.

According to an aspect there is provided a reversible rotation mechanism for generating a rotational motion, the reversible rotation mechanism comprising
- a first toothed wheel comprising first inclined teeth extending in a generally radial direction,
- a second toothed wheel comprising second inclined teeth extending in a generally radial direction, the first and second toothed wheels being positioned coaxially with respect to each other and the first and second inclined teeth are inclined in opposite directions with respect to each other,
- a plurality of actuators which are arranged to rotate the first toothed wheel in a first direction and the second toothed wheel in a second direction opposite to the first direction, wherein the reversible rotation mechanism comprises a plurality two-ended pawls, the two-ended pawls being connected to respective actuators, wherein the two-ended pawls can be positioned
- in a first engaging position in which a first pawl end engages with the first toothed wheel which allows the respective actuators to actuate the first toothed wheel in the first rotating direction, and
- in a second engaging position in which a second pawl end engages with the second toothed wheel which allows the respective actuators to actuate the second toothed wheel in the second rotating direction.

When all the two-ended pawls are positioned in the first engaging position, the actuators can move the first toothed wheel in the first rotating direction. When all the two-ended pawls are positioned in the second engaging position, the actuators can move the second toothed wheel in the second rotating direction.

When the two-ended pawls are positioned in the first engaging position, the two-ended pawls do not engage the second toothed wheel and when the two-ended pawls are positioned in the second engaging position, the two-ended pawls do not engage the first toothed wheel.

The first and second toothed wheels are positioned coaxially with respect to each other, meaning that their respective rotational axis substantially coincide. The first and second pawl-ends are positioned in the plane of the first and second toothed wheels respectively.

Furthermore, the first and second toothed wheels are fixed together, such that when the first toothed wheel is actuated to rotate in the first rotating direction, the second toothed wheel also rotates in the first rotating direction. Accordingly, when the second toothed wheel is actuated to rotate in the second rotating direction, the first toothed wheel also rotates in the second rotating direction.

Such a reversible rotation mechanism is relatively small and compact and can thus easily be placed on the deck of a vessel. The mechanism can be placed on the stem of a dredging or hopper vessel next to the accommodation. The reversible rotation mechanism is also relatively light-weighted.

Also, the reversible rotation mechanism provides a relatively high moment.

Further, such a reversible rotation mechanism is robust with regard to wear and pollution, which is an important advantage in the field of dredging.

The reversible rotation mechanism allows for rotation of the discharge pipe over large angles in the horizontal plane, for instance over 180 degrees, or even up to 225 degrees. The reversible rotation mechanism is relatively small and can thus be positioned in between an accommodation house provided on the deck of a vessel and a railing or a gangway. This is a relatively small passage along a left or right side of the vessel, close to the stem of the vessel. The discharge pipe can be positioned substantially perpendicular to the body axis of the vessel, but may also be positioned in a forward direction with respect the body axis of the vessel (running from stern to stem). The discharge pipe can also be rotated in a backward position allowing to discharge material aboard or alongside the vessel or allowing to position the discharge pipe on board of the vessel.

According to an embodiment the actuators are linear actuators which are positioned along the circumference of the first and second toothed wheel arranged to perform a linear stroke substantially tangentially to the circumference of the first and second toothed wheels. When the linear actuator moves along the circumference in the engaging direction of the toothed wheel that is currently engaged by the two-ended pawls, the associated two-ended pawl transfers energy to the respective toothed wheel. When the linear actuator moves back, i.e. moves along the circumference against the engaging direction of the toothed wheel that is currently engaged by the two-ended pawls, the two-ended pawl transfers no energy to the respective toothed wheel.

According to an embodiment the actuators are hydraulic cylinders. Hydraulic cylinders are relatively compact and strong. Hydraulic cylinders are also cost-effective and provide reliable actuators that can function in harsh conditions.

According to an embodiment the actuators are driven in a phased relationship with respect to each other. As energy can only be transferred to toothed wheels in one direction, the actuators can be controlled to move in a phased relationship, which means that the actuators may be operated with predetermined phase-differences with respect to each other. Different operations modes are available and will be described further below.

According to an embodiment the reversible rotation mechanism comprises four actuators. Providing four actuators allows to drive the toothed wheels in a constant way, where the actuators can be controlled in an effective phased-relationship. Also, providing four actuators allows to drive the toothed wheels with the same amount of power in both rotational directions.

According to an embodiment the linear stroke comprises an extending stroke and a retracting stroke, and wherein a first subset of the actuators are arranged to simultaneously actuate the first or second toothed wheel, wherein at least one of the first subset performs an extending stroke and at least another of the first subset performs a retracting stroke, and wherein a second subset of the actuators are arranged to simultaneously actuate the first or second toothed wheel, wherein at least one of the second subset performs an extending stroke and at least another of the second subset performs a retracting stroke.

The first subset thus comprises actuators that are oppositely directed with respect to each other. The first subset may comprise at least one actuator that is orientated such that the extending stroke is substantially in the direction of the first rotating direction and another actuator which is orientated such that the extending stroke is substantially in the direction of the second rotating direction. The same applies for the second subset.

This has the advantage that the same power is transferred to the toothed wheels in both the rotational directions.

According to an embodiment the first and second subsets actuate the first or second toothed wheels in turns.

According to an embodiment a first subset of the two-ended pawls can be positioned in the first engaging position and a second subset of the two-ended pawls can be positioned in the second engaging position to lock rotation of the reversible rotation mechanism. This way a relatively simple and reliable locking mechanism is provided.

According to an embodiment the two-ended pawls are connected to the respective actuators via a hinged connection member. The hinged connection member ensures that due to the movement of the actuators the two-ended pawls are moved to the first or second engaging position, depending on the direction of movement of the actuator. To prevent the two-ended pawls from engaging the wrong toothed wheel during back-and-forth movement of the actuators, a lock may be provided.

According to an embodiment the mechanism further comprises a plurality of locks, each lock being associated with a two-ended pawl, the locks can be operated in a first and second lock state, wherein
- in the first lock state the lock prevents the two-ended pawl from reaching the second engaging position and
- in the second lock state the lock prevents the two-ended pawl from reaching the first engaging position.

The lock may be formed as two receptacles in which a stop can be positioned. A first receptacle may be positioned in a radial outward position behind the first pawl end, limiting the radial outward movement of the first pawl end and thereby preventing the second pawl end from reaching the second engaging position. A stop is positioned in the first receptacle when the two-ended pawl is in the first engaging position. In other words, a stop positioned in the first receptacle limits the movement of the two-ended pawl. Accordingly, a second receptacle may be positioned in a radial outward position behind the second pawl end.

It will be understood that the first and second receptacles may also be positioned at other suitable positions, for instance in between the first or second pawl end and the corresponding toothed wheels. Alternatively, the lock may be formed by two receptacles: one in a radial outward position behind the first or second pawl end and one in between the first or second pawl end and the inclined teeth.

According to an aspect there is provided a discharge assembly for discharging dredged material, the discharge assembly comprising a discharge pipe being rotatable about a substantially vertical axis wherein the discharge pipe is rotatable by means of a reversible rotation mechanism according to any one of the embodiments provided.

According to an embodiment the discharge assembly further comprises a pump with a pump inlet and a pump outlet, the pump inlet being connected to a supply conduit arranged for supplying dredged material to the pump and the pump outlet being connected to the discharge pipe arranged for discharging the dredged material.

According to an embodiment the discharge pipe runs through the first and second toothed wheels of the reversible rotation mechanism in a substantial vertical direction which is substantially coaxial with respect to the rotational axes of the first and second toothed wheels, the discharge pipe comprising a bend at a downstream side of the reversible rotation mechanism. By providing a bend of for instance 45 degrees or 90 degrees, the discharge end of the discharge pipe faces in a direction suitable for discharging material. The bend may for instance be 45 degrees, being suitable for spraying the material into the air. The bend may also be 90 degrees, providing a substantially horizontal discharge pipe which extends beyond a dredging vessel for discharging the material with a relatively low velocity close to the location where the dredged material is to be discharged.

According to an embodiment the discharge pipe comprises an upstream discharge pipe part and a downstream discharge pipe part, the upstream and downstream discharge pipe part being connected by means of a rotational connection inside or upstream of the reversible rotation mechanism. This rotational connection allows the upstream and downstream discharge pipe parts to rotate with respect to each other about a longitudinal body axis of the pipe.

According to an aspect there is provided a vessel for discharging dredged material comprising a reversible rotation mechanism or discharge assembly according to any one of the embodiments. The vessel may be a dredging vessel or a hopper vessel.

According to an embodiment the vessel comprises at least one superstructure integrated with the reversible rotation mechanism or discharge assembly. A superstructure is a structure that is formed on the deck which forms an integral part of the vessel. The superstructure rises is positioned on top of the deck and thus rises above the level of the main deck. A superstructure may be one of a deckhouse, accommodation, chimney, ventilation house, cabin, forecastle deck, etc. The superstructure may be arranged to provide living accommodation and/or working accommodation.

### SHORT DESCRIPTION OF THE DRAWINGS

Embodiments will now be described, by way of example only, with reference to the accompanying schematic drawings in which corresponding reference symbols indicate corresponding parts, and in which:
- Figure 1 schematically depicts a reversible rotation mechanism according to an embodiment,
- Figure 2 schematically depicts a discharge assembly according to an embodiment.

### DETAILED DESCRIPTION

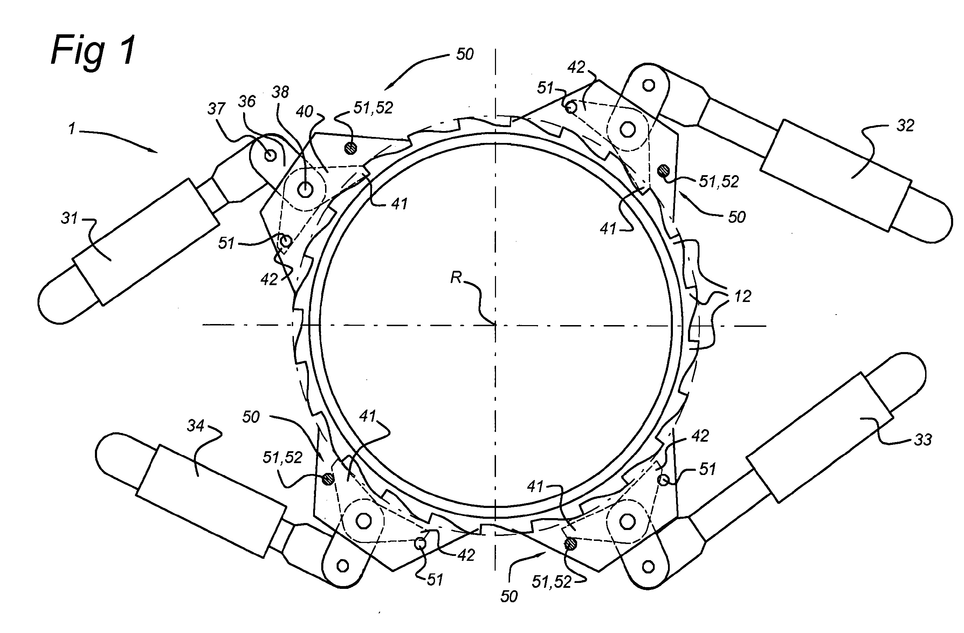

Fig. 1 schematically depicts a reversible rotation mechanism 1 according to an embodiment. The mechanism 1 comprises four hydraulic cylinders 31 - 34 forming actuators, two toothed wheels 11,21 and four two-ended pawls 40.

Both toothed wheels 11, 21 comprise inclined teeth 12, 22. The first and second toothed wheels 11, 12 are positioned coaxially with respect to each other and can rotate about a rotational axis R, which is substantially perpendicular to the plane of drawing of Fig. 1.

The inclined teeth 12, 22 are formed asymmetrical. Each tooth has a moderate slope on one side and a steeper slope on the other side. This ensures that the respective pawl ends 41, 42 of the two-ended pawls 40 only engage the toothed wheels 11,21 in one direction, i.e. will engage the steeper slope, and run free in the opposite direction, i.e. slide up and over the moderate slope.

The engaging direction of the first toothed wheel is opposite to the engaging direction of the second toothed wheel. In other words, the moderate slopes of the first inclined teeth 12 of the first toothed wheel 11 are positioned on the opposite side with respect to the moderate slopes of the second inclined teeth 22 of the second toothed wheel 21.

The embodiment depicted in Fig. 1 comprises four actuators 31 - 34, but it will be understood that any suitable type of actuators may be provided, preferably an even number of actuators. According to an embodiment, two actuators may be provided that actuate the toothed wheels 11, 12 in turn thereby providing a constant rotation or that actuate the toothed wheels 11, 12 simultaneously thereby providing an interrupted rotation. According to a further embodiment, one actuator may be provided which can rotate the toothed wheels 11, 12 in an interrupted way.

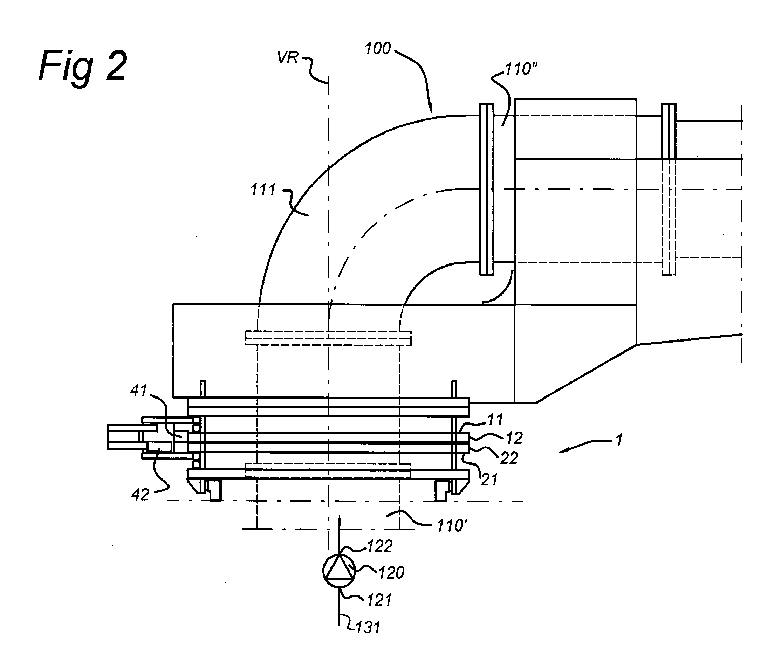

Each actuator 31 - 34 comprises a pawl 40 with two ends 41, 42. The actuator can engage and actuate the toothed wheels 11, 21 via the pawl 40. The pawl can be positioned in a first engaging position in which the first pawl end 41 engages the first toothed wheel 11 and in a second engaging position in with the second pawl end 42 engages with the second toothed wheel 21. The first and second pawl ends 41, 42 are thus in different planes, as can be seen in Fig. 2.

The actuators 31 - 34 may be linear actuators being arranged to perform a linear stroke which is substantially tangentially with respect to the toothed wheels 11, 21. As can be seen in Fig. 1, two actuators 31, 33 are arranged to have their extending stroke in a first rotational direction while the two other actuators 32, 34 are positioned in an opposite direction. This provides a relatively small reversible rotation mechanism. This has also advantages when controlling the actuators in a phased relationship.

For instance, the four linear actuators may be controlled in a four-phased relationship, wherein
- a first actuator 31 may be +90 degrees out of phase with respect to a second actuator 32,
- the second actuator 32 may be +90 degrees out of phase with respect to a third actuator 33,
- the third actuator 33 may be +90 degrees out of phase with respect to a fourth actuator 34, and
- the fourth actuator 34 may be +90 degrees out of phase with respect to the first actuator 31.

This four-phased control may also be employed for embodiments in which all actuators 31 - 34 have the same orientation with respect to the first rotational direction.

According to the embodiment shown in Fig. 1 a first subset of the actuators, comprising the first and second actuators 31, 32, are arranged to simultaneously actuate the first or second toothed wheel 11, 21. As shown in Fig. 1, the first actuator 31 is about to start performing an extending stroke and the second actuator 32 is about to start performing a retracting stroke. A second subset of actuators, comprising the third and fourth actuators 33, 34 are arranged to simultaneously actuate the first or second toothed wheel 11, 21, when the first and second actuators 31,32 are not actuating the toothed wheels but are moving back to their starting positions. As shown in Fig. 1, the third actuator 33 is about to perform a retracting stroke in which no energy or force is transferred to the first toothed wheel 11. The fourth actuator 34 is about to perform an extending stroke in which no energy or force is transferred to the first toothed wheel 11.

By operating the first and second subsets 31, 32; 33, 34 in turns, the reversible rotation mechanism can be rotated in a constant way.

So, during rotation, two actuators will in turn simultaneously transfer energy to the engaged toothed wheel, one being loaded on the piston, the other being loaded on the ring surface. When the two actuators 31,32 reach their end positions, the two second actuators 33, 34 take over and the first two actuators 31,32 can move back to their starting positions. This provides a continuous rotational movement.

One toothed wheel is used for rotation in one direction, the other toothed wheel is used for rotation in the opposite direction. In order to change the direction of rotation, the two-ended pawls 40 are changed from the first to the second engaging position or vice versa in order to operate the other toothed wheel.

Fig. 1 further shows locks 50, one for each two-ended pawl 40. The lock 50 is provided to lock the two-ended pawl 40 in the first or second engaging position and for preventing the two-ended pawl 40 from reaching the other engaging position,. The lock prevents excessive movement of the two-ended pawl 40 and thereby prevents the two-ended pawl 40 from reaching a position in which it contacts the other toothed wheel thereby blocking the reversible rotation mechanism. As shown in Fig. 1, the third and fourth actuators 33, 34 are about to move back to their starting position during which the pawls 40 will not actuate the first toothed wheel 11. During this movement, the lock 50 prevents the two-ended pawl 40 from reaching a position in which the second end 42 of the two-ended pawl 40 engages with the second toothed wheel 21, which would jam rotation of the reversible rotation mechanism.

The locks 50 as shown in Fig. 1 comprise two receptacles 51 in which a stopping member 52 can be positioned. The stopping member 52 may be a rod that fits in the receptacle 51. In Fig. 1, for each two-ended pawl 40, one receptacle 51 comprises a stopping member 52, the other receptacle 51 being empty.

As can be seen in Fig. 1, the two-ended pawls 40 are attached to the respective actuators 31 - 34 by means a connection member 36 which at a first end is rotatable connected to the actuator via a first hinge 37. The first hinge 37 defines a hinge axis that is substantially parallel to the rotational axes R of the first and second toothed wheels. The connection member 36 is at a second end rotatable connected to the two-ended pawl 40 via a second hinge 38 which defines a hinge axis that is substantially parallel to the rotational axes R of the first and second toothed wheels.

This construction ensures that due to the movement of the actuators 31 - 34 the two-ended pawls 40 are moved to the first or second engaging position, unless movement of the two-ended pawls 40 is restricted by the locks 50.

According to the example shown in Fig. 1, when the first actuator 31 performs an extending stroke, the two-ended pawl 40 will automatically be pushed into the first engaging position. When the first actuator 31 performs a retracting stroke, the two-ended pawl 40 will automatically be pushed towards the second engaging position, although this is prevented by the stopping member 52.

Fig. 2 schematically depicts a cross-sectional side view of a discharge assembly 100 for discharging dredged material. The discharge assembly 100 comprises a discharge pipe 110 being rotatable about a substantially vertical axis V by means of a reversible rotation mechanism 1. The discharge pipe runs through the toothed wheels 11,21 of the reversible rotation mechanism 1 and is connected to the toothed wheels 11,21 such that when one of the toothed wheels 11, 21 is rotated, the discharge pipe also rotates. At the downstream side of the reversible rotation mechanism 1 the discharge pipe 110 comprises a downstream discharge pipe part 110" which comprises a bend 111 of approximately 90 degrees. The downstream discharge pipe part 110" is connected by means of a rotational connection to an upstream discharge pipe part 110', inside or upstream of the reversible rotation mechanism 1.

Fig. 2 further schematically shows a pump 120 for pumping the material to be discharged through the discharge pipe.

Descriptions above are intended to be illustrative, not limiting. Thus, it will be apparent to one skilled in the art that modifications may be made to the invention as described without departing from the scope of the claims set out below.

### LIST OF ELEMENTS

- 1: Reversible rotation mechanism
- 11: first toothed wheel
- 12: first inclined teeth
- 21: second toothed wheel
- 22: second inclined teeth
- 31 - 34: actuators
- 36: connection member
- 37: first hinge
- 38: second hinge
- 40: two-ended pawl
- 41: first pawl end
- 42: second pawl end
- 50: lock
- 51: receptacle
- 52: stopping member
- 100: discharge assembly
- 110: discharge pipe
- 110': upstream discharge pipe part
- 110": downstream discharge pipe part
- 111: bend of the discharge pipe
- V: vertical axis
- 120: pump
- 121: pump inlet
- 122: pump outlet
- 131: supply conduit
- R: rotational axes of the first and second toothed wheels

## Claims

1. Reversible rotation mechanism (1) for generating a rotational motion, the reversible rotation mechanism (1) comprising
- a first toothed wheel (11) comprising first inclined teeth (12) extending in a generally radial direction,
- a second toothed wheel (21) comprising second inclined teeth (22) extending in a generally radial direction, the first and second toothed wheels being positioned coaxially with respect to each other and the first and second inclined teeth (12, 22) are inclined in opposite directions with respect to each other,
- a plurality of actuators (31 - 34) which are arranged to rotate the first toothed wheel (11) in a first direction and the second toothed wheel (21) in a second direction opposite to the first direction,
**characterized in that** the reversible rotation mechanism (1) comprises a plurality two-ended pawls (40), the two-ended pawls being connected to respective actuators (31- 34), wherein the two-ended pawls can be positioned
- in a first engaging position in which a first pawl end (41) engages with the first toothed wheel (11) which allows the respective actuators to actuate the first toothed wheel (11) in the first rotating direction, and
- in a second engaging position in which a second pawl end (42) engages with the second toothed wheel (21) which allows the respective actuators to actuate the second toothed wheel (21) in the second rotating direction.

2. Reversible rotation mechanism according to claim 1, wherein the actuators (31-34) are linear actuators which are positioned along the circumference of the first and second toothed wheels (11, 21) arranged to perform a linear stroke substantially tangentially to the circumference of the first and second toothed wheels (11, 21).

3. Reversible rotation mechanism according to any one of the preceding claims, wherein the actuators (31 - 34) are hydraulic cylinders.

4. Reversible rotation mechanism according to any one of the preceding claims, wherein the actuators (31 - 34) are driven in a phased relationship with respect to each other.

5. Reversible rotation mechanism according to any one of the preceding claims comprising four actuators (31 - 34).

6. Reversible rotation mechanism according to any one of the claims 2 - 5, wherein the linear stroke comprises an extending stroke and a retracting stroke, and
wherein a first subset of the actuators (31, 32) are arranged to simultaneously actuate the first or second toothed wheel (11, 21), wherein at least one of the first subset performs an extending stroke and at least another of the first subset performs a retracting stroke, and
wherein a second subset of the actuators (33, 34) are arranged to simultaneously actuate the first or second toothed wheel (11, 21), wherein at least one of the second subset performs an extending stroke and at least another of the second subset performs a retracting stroke.

7. Reversible rotation mechanism according to claim 6, wherein the first and second subsets actuate the first or second toothed wheels (11, 21) in turns.

8. Reversible rotation mechanism according to any one of the preceding claims, wherein a first subset of the two-ended pawls (40) can be positioned in the first engaging position and a second subset of the two-ended pawls can be positioned in the second engaging position to lock rotation of the reversible rotation mechanism.

9. Reversible rotation mechanism according to any one of the preceding claims, wherein the two-ended pawls (40) are connected to the respective actuators (31 - 34) via a hinged connection member (36).

10. Reversible rotation mechanism according to any one of the preceding claims further comprising a plurality of locks (50), each lock (50) being associated with a two-ended pawl (40), the locks (50) can be operated in a first and second lock state, wherein
- in the first lock state the lock (50) prevents the two-ended pawl (40) from reaching the second engaging position and
- in the second lock state the lock (50) prevents the two-ended pawl (40) from reaching the first engaging position.

11. Discharge assembly (100) for discharging dredged material, the discharge assembly (100) comprising a discharge pipe (110) being rotatable about a substantially vertical axis (V) **characterized in that** the discharge pipe (110) is rotatable by means of a reversible rotation mechanism (1) according to any one of the preceding claims.

12. Discharge assembly (100) according to claim 11, wherein the discharge assembly (100) further comprises a pump (120) with a pump inlet (121) and a pump outlet (122), the pump inlet (121) being connected to a supply conduit (131) arranged for supplying dredged material to the pump (120) and the pump outlet (122) being connected to the discharge pipe (110) arranged for discharging the dredged material.

13. Discharge assembly (100) according to any one of the claims 11 - 12, wherein the discharge pipe (110) runs through the first and second toothed wheels (11, 21) of the reversible rotation mechanism (1) in a substantial vertical direction which is substantially coaxial with respect to the rotational axes (R) of the first and second toothed wheels (11, 21), the discharge pipe (110) comprising a bend (111) at a downstream side of the reversible rotation mechanism (1).

14. Discharge assembly (100) according to any one of the claims 11 - 13, wherein the discharge pipe (110) comprises an upstream discharge pipe part (110') and a downstream discharge pipe part (110"), the upstream and downstream discharge pipe parts being connected by means of a rotational connection inside or upstream of the reversible rotation mechanism (1).

15. Vessel for discharging dredged material comprising a reversible rotation mechanism according to any one of the claims 1 - 10 or comprising a discharge assembly (100) according to any one of the claims 11 - 14.

16. Vessel according to claim 15, wherein the vessel comprises at least one superstructure integrated with the reversible rotation mechanism (1) or discharge assembly (100).

## Patentansprüche

1. Umkehrbarer Drehmechanismus (1), zum Erzeugen einer Drehbewegung, wobei der umkehrbare Drehmechanismus (1) Folgendes aufweist:
ein erstes Zahnrad (11) mit ersten Schrägzähnen (12), die sich in einer im Allgemeinen radialen Richtung erstrecken,
ein zweites Zahnrad (21) mit zweiten Schrägzähnen (22), die sich in einer im Allgemeinen radialen Richtung erstrecken, wobei das erste und zweite Zahnrad in Bezug zueinander koaxial angeordnet sind und die ersten und weiten Schrägzähne (12, 22) in Bezug zueinander in entgegengesetzten Richtungen geneigt sind,
eine Vielzahl von Betätigungselementen (31-34), die eingerichtet sind, um das erste Zahnrad (11) in einer ersten Richtung und das zweite Zahnrad (21) in einer zweiten Richtung zu drehen, die der ersten Richtung entgegengesetzt ist,
**dadurch gekennzeichnet, dass** der umkehrbare Drehmechanismus (1) eine Vielzahl zweiendiger Klinken (40) aufweist, wobei die zweiendigen Klinken mit entsprechenden Betätigungselementen (31-34) verbunden sind, wobei die zweiendigen Klinken wie folgt angeordnet werden können:
in einer ersten Eingriffsposition, in der ein erstes Klinkenende (41) mit dem ersten Zahnrad (11) in Eingriff ist, was den entsprechenden Betätigungselementen erlaubt, das erste Zahnrad (11) in der ersten Drehrichtung zu betätigen, und
in einer zweiten Eingriffsposition, in der ein zweites Klinkenende (42) mit dem zweiten Zahnrad (21) in Eingriff ist, was den entsprechenden Betätigungselementen erlaubt, das zweite Zahnrad (21) in der zweiten Drehrichtung zu betätigen.

2. Umkehrbarer Drehmechanismus nach Anspruch 1, wobei die Betätigungselemente (31-34) lineare Betätigungselemente sind, die entlang des Umfangs des ersten und zweiten Zahnrads (11, 21) angeordnet und eingerichtet sind, um einen linearen Hub im Wesentlichen tangential zu dem Umfang des ersten und zweiten Zahnrads (11, 21) durchzuführen.

3. Umkehrbarer Drehmechanismus nach einem der vorstehenden Ansprüche, wobei die Betätigungselemente (31-34) Hydraulikzylinder sind.

4. Umkehrbarer Drehmechanismus nach einem der vorstehenden Ansprüche, wobei die Betätigungselemente (31-34) in einem aufeinander abgestimmten Verhältnis angetrieben sind.

5. Umkehrbarer Drehmechanismus nach einem der vorstehenden Ansprüche mit vier Betätigungselementen (31-34).

6. Umkehrbarer Drehmechanismus nach einem der Ansprüche 2 bis 5, wobei der lineare Hub einen Ausfahrhub und einen Einziehhub aufweist, und
wobei eine erste Teilmenge der Betätigungselemente (31, 32) eingerichtet sind, um gleichzeitig das erste oder zweite Zahnrad (11, 21) zu betätigen, wobei mindestens eines aus der ersten Teilmenge einen Ausfahrhub ausführt und mindestens ein anderes aus der ersten Teilmenge einen Einziehhub ausführt, und
wobei eine zweite Teilmenge der Betätigungselemente (33, 34) eingerichtet ist, um gleichzeitig das erste oder zweite Zahnrad (11, 21) zu betätigen, wobei mindestens eines aus der zweiten Teilmenge einen Ausfahrhub ausführt und mindestens ein anderes aus der zweiten Teilmenge einen Einziehhub ausführt.

7. Umkehrbarer Drehmechanismus nach Anspruch 6, wobei die erste und zweite Teilmenge das erste oder zweite Zahnrad (11, 21) abwechselnd betätigen.

8. Umkehrbarer Drehmechanismus nach einem der vorstehenden Ansprüche, wobei eine erste Teilmenge der zweiendigen Klinken (40) in der ersten Eingriffsposition angeordnet werden kann und eine zweite Teilmenge der zweiendigen Klinken in der zweiten Eingriffsposition angeordnet werden kann, um eine Drehung des umkehrbaren Drehmechanismus zu blockieren.

9. Umkehrbarer Drehmechanismus nach einem der vorstehenden Ansprüche, wobei die zweiendigen Klinken (40) mit den entsprechenden Betätigungselementen (31-34) mittels eines angelenkten Verbindungselements (36) verbunden sind.

10. Umkehrbarer Drehmechanismus nach einem der vorstehenden Ansprüche, ferner mit einer Vielzahl von Verriegelungen (50), wobei jede Verriegelung (50) einer zweiendigen Klinke (40) zugeordnet ist, wobei die Verriegelungen (50) in einem ersten und zweiten Verriegelungszustand betätigbar sind, wobei
die Verriegelung (50) in dem ersten Verriegelungszustand die zweiendige Klinke (40) daran hindert, die zweite Eingriffsposition zu erreichen, und
die Verriegelung (50) in dem zweiten Verriegelungszustand die zweiendige Klinke (40) daran hindert, die erste Eingriffsposition zu erreichen.

11. Entladeanordnung (100) zum Entladen von Baggergut, wobei die Entladeanordnung (100) eine Entladerohrleitung (110) hat, die um eine im Wesentlichen senkrechte Achse (V) drehbar ist, **dadurch gekennzeichnet, dass** die Entladerohrleitung (110) mittels eines umkehrbaren Drehmechanismus (1) nach einem der vorstehenden Ansprüche drehbar ist.

12. Entladeanordnung (100) nach Anspruch 11, wobei die Entladeanordnung (100) ferner eine Pumpe (120) mit einem Pumpeneinlass (121) und einem Pumpenauslass (122) hat, wobei der Pumpeneinlass (121) mit einer Versorgungsleitung (131) verbunden ist, die eingerichtet ist, um die Pumpe (120) mit Baggergut zu versorgen, und wobei der Pumpenauslass (122) mit der Entladerohrleitung (110) verbunden ist, die eingerichtet ist, das Baggergut zu entladen.

13. Entladeanordnung (100) nach einem der Ansprüche 11 bis 12, wobei die Entladerohrleitung (110) durch das erste und zweite Zahnrad (11, 21) des umkehrbaren Drehmechanismus (1) in einer im Wesentlichen senkrechten Richtung verläuft, die in Bezug auf die Drehachsen (R) des ersten und zweiten Zahnrads (11, 21) im Wesentlichen koaxial ist, wobei die Entladerohrleitung (110) einen Bogen (111) an einer Seite hat, die stromabwärts des umkehrbaren Drehmechanismus (1) ist.

14. Entladeanordnung (100) nach einem der Ansprüche 11 bis 13, wobei die Entladerohrleitung (110) einen stromaufwärtigen Rohrleitungsabschnitt (110') und einen stromabwärtigen Rohrleitungsabschnitt (110") hat, wobei der stromaufwärtige und stromabwärtige Rohrleitungsabschnitt mittels eines drehbaren Anschlusses innerhalb oder stromaufwärts des umkehrbaren Drehmechanismus (1) verbunden sind.

15. Schiff, zum Entladen von Baggergut mit einem umkehrbaren Drehmechanismus nach einem der Ansprüche 1 bis 10 oder mit einer Entladeanordnung (100) nach einem der Ansprüche 11 bis 14.

16. Schiff nach Anspruch 15, wobei das Schiff mindestens einen Aufbau hat, der mit dem umkehrbaren Drehmechanismus (1) oder der Entladeanordnung (100) kombiniert ist.

## Revendications

1. Mécanisme de rotation réversible (1) pour produire un mouvement de rotation, le mécanisme de rotation réversible (1) comprenant :
- une première roue dentée (11) comprenant des premières dents inclinées (12) s'étendant dans une direction généralement radiale,
- une seconde roue dentée (21) comprenant des secondes dents inclinées (22) s'étendant dans une direction généralement radiale, les première et seconde roues dentées étant positionnées coaxialement l'une par rapport à l'autre et les premières et secondes dents inclinées (22) sont inclinées dans des directions opposées l'une par rapport à l'autre,
- plusieurs actionneurs (31 à 34) qui sont agencés pour faire tourner la première roue dentée (11) dans une première direction et la seconde roue dentée (21) dans une seconde direction opposée à la première direction,
**caractérisé en ce que** le mécanisme de rotation réversible (1) comprend plusieurs cliquets à deux extrémités (40), les cliquets à deux extrémités étant reliés à des actionneurs respectifs (31 à 34), les cliquets à deux extrémités pouvant être positionnés :
- dans une première position de prise dans laquelle une première extrémité de cliquet (41) vient en prise avec la première roue dentée (11) ce qui permet aux actionneurs respectifs d'actionner la première roue dentée (11) dans la première direction de rotation, et
- dans une seconde position de prise dans laquelle une seconde extrémité de cliquet (42) vient en prise avec la seconde roue dentée (21) ce qui permet aux actionneurs respectifs d'actionner la seconde roue dentée (21) dans la seconde direction de rotation.

2. Mécanisme de rotation réversible selon la revendication 1, dans lequel les actionneurs (31 à 34) sont des actionneurs linéaires, qui sont positionnés le long de la circonférence des première et seconde roues dentées (11, 21), agencés pour effectuer une course linéaire sensiblement tangentielle à la circonférence des première et seconde roues dentées (11,21).

3. Mécanisme de rotation réversible selon l'une quelconque des revendications précédentes, dans laquelle les actionneurs (31 à 34) sont des vérins hydrauliques.

4. Mécanisme de rotation réversible selon l'une quelconque des revendications précédentes, dans laquelle les actionneurs (31 à 34) sont entraînés dans une relation de phase l'un par rapport à l'autre.

5. Mécanisme de rotation réversible selon l'une quelconque des revendications précédentes, comprenant quatre actionneurs (31 à 34).

6. Mécanisme de rotation réversible selon l'une quelconque des revendications 2 à 5, dans lequel la course linéaire comprend une course d'extension et une course de rétraction, et
dans lequel un premier sous-ensemble des actionneurs (31, 32) est agencé pour actionner simultanément les première ou seconde roues dentées (11, 21), dans lequel au moins l'un du premier sous-ensemble effectue une course d'extension et au moins l'autre du premier sous-ensemble effectue une course de rétraction, et
dans lequel un second sous-ensemble des actionneurs (33, 34) est agencé pour actionner simultanément les première ou seconde roues dentées (11, 21), dans lequel au moins l'un du second sous-ensemble effectue une course d'extension et au moins l'autre du second sous-ensemble effectue une course de rétraction.

7. Mécanisme de rotation réversible selon la revendication 6, dans lequel les premier et second sous-ensembles actionnent la première ou la seconde roue dentée (11, 21) à tour de rôle.

8. Mécanisme de rotation réversible selon l'une quelconque des revendications précédentes, dans lequel un premier sous-ensemble des cliquets à deux extrémités (40) peut être positionné dans la première position de prise et un second sous-ensemble des cliquets à deux extrémités peut être positionné dans la seconde position de prise pour bloquer une rotation du mécanisme de rotation réversible.

9. Mécanisme de rotation réversible selon l'une quelconque des revendications précédentes, dans lequel les cliquets à deux extrémités (40) sont reliés aux actionneurs respectifs (31 à 34) par l'intermédiaire d'un élément de liaison articulée (36).

10. Mécanisme de rotation réversible selon l'une quelconque des revendications précédentes, comprenant de plus plusieurs verrous (50), chaque verrou (50) étant associé à un cliquet à deux extrémités (40), les verrous (50) pouvant être actionnés dans un premier et un second état de verrouillage, dans lesquels :
- dans le premier état de verrouillage le verrou (50) empêche le cliquet à deux extrémités (40) d'atteindre la seconde position de prise, et
- dans le second état de verrouillage, le verrou (50) empêche le cliquet à deux extrémités (40) d'atteindre la première position de prise.

11. Ensemble d'évacuation (100) pour évacuer un matériau de dragage, l'ensemble d'évacuation (100) comprenant un tuyau d'évacuation (110) pouvant tourner autour d'un axe vertical (V) **caractérisé en ce que** le tuyau d'évacuation (110) est mis en rotation par l'intermédiaire d'un mécanisme de rotation réversible (1) selon l'une quelconque des revendications précédentes.

12. Ensemble d'évacuation (100) selon la revendication 11, dans lequel l'ensemble d'évacuation (100) comprend de plus une pompe (120) ayant une entrée de pompe (121) et une sortie de pompe (122), l'entrée de pompe (121) étant reliée à une conduite d'alimentation (131) agencée pour alimenter un matériau de dragage vers la pompe (120) et la sortie de pompe (122) étant reliée au tuyau d'évacuation (110) agencé pour évacuer le matériau de dragage.

13. Ensemble d'évacuation (100) selon l'une quelconque des revendications 11 ou 12, dans lequel le tuyau d'évacuation (110) s'étend à travers les première et seconde roues dentées (11, 21) du mécanisme de rotation réversible (1) dans une direction sensiblement verticale qui est sensiblement coaxiale par rapport aux axes de rotation (R) des première et seconde roues dentées (11, 21), le tuyau d'évacuation (110) comprenant un coude (111) au niveau d'un côté aval du mécanisme de rotation réversible (1).

14. Ensemble d'évacuation (100) selon l'une quelconque des revendications 11 à 13, dans lequel le tuyau d'évacuation (110) comprend une partie de tuyau d'évacuation amont (110') et une partie de tuyau d'évacuation aval (110"), les parties de tuyau d'évacuation amont et aval étant reliées par l'intermédiaire d'une liaison rotative à l'intérieur ou en amont du mécanisme de rotation réversible (1).

15. Navire pour évacuer un matériau de dragage comprenant un mécanisme de rotation réversible selon l'une quelconque des revendications 1 à 10 ou comprenant un ensemble d'évacuation (100) selon l'une quelconque des revendications 11 à 14.

16. Navire selon la revendication 15, dans lequel le navire comprend au moins une superstructure intégrée avec le mécanisme de rotation réversible (1) ou l'ensemble d'évacuation (100).
